# EUROPEAN PATENT APPLICATION

(11) **EP 1 672 833 A1**
(43) Date of publication of application: **21.06.2006**
(21) Application number: 04029739.2
(22) Date of filing: 15.12.2004
(51) Int. Cl.: H04L 12/18, H04L 12/46, H04L 12/56

(54) **Multicast service for Metro-Ethernet**

(71) Applicant: SIEMENS AKTIENGESELLSCHAFT, 80333 München (DE)
(72) Inventor: Lee, Seungdong, Eunpyeong Seoul 122-751 (KR)

(57) **Abstract**

The invention replicates an IP data packet (202). A plurality of networks connecting local clients to a central hub are logically configured. A switch (208) having at least one input port (210₁) coupled to a network and a plurality of output ports (210₂₋₇) coupled to other networks, assigns at least one output port (210₇) to more than one network. At least one of the output ports (210₇) of the switch (208) is configured to loop back the replicated data packets to the other remaining output ports (210₂₋₆).

## Description

In Metropolitan Area Networks (MANs), the Ethernet has the potential to cost-effectively increase network capacity and offer a wide range of service offerings in a scalable, simple, and flexible manner. An Ethernet based MAN is generally termed a Metro Ethernet Network (MEN). The Metro Ethernet Networks provide connectivity services across a Metro geography utilizing Ethernet as the core protocol and enabling broadband applications. In particular, the Metro Ethernet Network bridges or connects geographically separated enterprise LANs while also connecting across the WAN or backbone networks that are generally owned by service providers.

As the trend in multicast continues to spread, multicast replication becomes an important issue. Replication is central to distributing the data in a multicast system. The data must be replicated in order to send the transmission to multiple end users. Replication is also the basis for disaster recovery or high availability solutions.

When a switching chipset replicates a source multicast packet, different types of problems occur depending on the particular switching chipset architecture employed. One of the problems is that the total number of packets replicated is limited. Consider, for example, the commonly-employed 802.1Q VLAN, a proposed standard of the Institute of Electrical and Electronics Engineers.

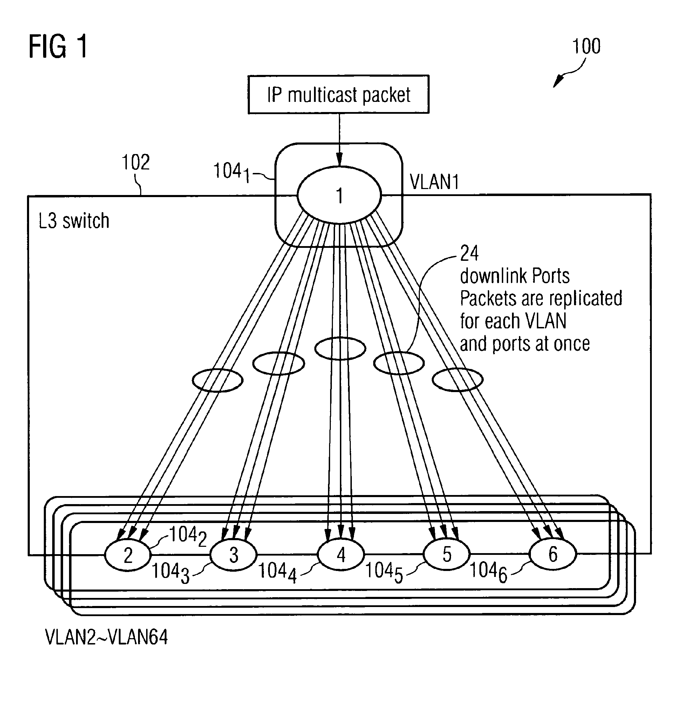

The problem will be best understood by considering the traditional VLAN configuration shown in Figure 1. As shown in the figure, the VLAN is an administratively configured LAN or broadcast domain 100. By using a configurable switch, such as the layer 3 switch (L3) 102 or another 802.1Q-compliant switch, the VLAN configuration 100 can be set with different virtual IDs (VIDs) for each L3 VLAN. Here, the switch 102 allocates the ports 104₁₋₆₄ to corresponding VLANs 106₁₋₆₄.

The advantages of a configurable LAN are clear. Instead of going to the wiring closet to move a cable to a different LAN, network administrators accomplish this task remotely by configuring a port on the switch. The ability to move end stations to different broadcast domains by setting membership profiles for each port on centrally managed switches is one of the main advantages of 802.1Q VLANs.

In this case, the switch 104 acts as an intelligent traffic forwarder and a simple network security device. Frames are sent only to the ports where the destination device is attached. Broadcast and multicast frames are constrained by VLAN boundaries so only stations whose ports are members of the same VLAN see those frames. In this manner, bandwidth is optimized and network security is enhanced. 802.1Q VLANs are not limited to one switch. VLANs can span many switches, even across WAN links. Sharing VLANs between switches is achieved by inserting a tag with a VLAN identifier (VID) between one and 4,094 into each frame. A VID must be assigned for each VLAN. By assigning the same VID to VLANs on many switches, one or more VLAN (broadcast domain) can be extended across a large network.

This is carried out by making use of the tags. 802.1Q-compliant switch ports can be configured to transmit tagged or untagged frames. A tag field containing VLAN (and/or 802.1p priority) information can be inserted into an Ethernet frame. If a port has an 802.1Q-compliant device attached (such as another switch), these tagged frames can carry VLAN membership information between switches, thus letting a VLAN span multiple switches.

The solution takes advantage of the 802.1Q IEEE standard that introduced VLAN tags, which identifies the VLAN protocol ID for one thing. When a layer 3 switch identifies a VLAN tag in an incoming frame, the switch uses the VLAN ID as an index into a table to determine which ports to send the frame. The L3 switch then replicates the source packet by the number of total L3 VLANs. This is of course in the best case scenario, and assuming that all ports and VLANs have a member. For example, a given L3 switch has 24 downlink ports and each port has 63 802.1Q tagged VLANs. Then, the L3 switch should replicate 24*63 = 1512 packets in this case.

Problematically, commercial switching hardware does not support L3 switching for all VLANs supported but usually limits the number of L3-capable VLANs to, for example, 31 or 64 out of 4k. To circumvent this, ASIC chips were proposed that would allow all VLANs to be supported. However, owing to low cost, often a cheap L3 switching chipset is produced that is incapable to replicate the amount of packets required. In practice, usually about 10 replica for a specific packet for 63 VLANs is the normal yield.

Thus, the only option left is to use expensive devices that provide large numbers of packet replication. In some architectures, the multicast packet replication module is separately provided adding even more to the complexity of the solution. It may be possible, for example, and it has been attempted to employ the CPU to perform the additional packet replication. However, this solution would place to high a burden on the CPU. Considering the amount of processing required for multi-casting, this solution is not realistic for high bandwidth multicast streaming.

### SUMMARY OF THE INVENTION

The invention, in one variation, employs VLANs that are configured and operate in accordance with the proposed VLAN standard 802.1Q Institute of Electrical and Electronics Engineers. However, the VLANs do not necessarily need to operate in accordance with this standard, but may operate in accordance with other operating rules.

The invention replicates an IP data packet. A plurality of networks connecting local clients to a central hub are logically configured. A switch, having at least one input port coupled to a network and a plurality of output ports coupled to other networks, assigns at least one output port to more than one network. At least one of the output ports of the switch is configured to loop back the replicated data packets to the other remaining output ports.

Replication places multiple copies of the same data at different locations. Replication is often used to load balance or reduce network traffic generated by remote database clients, merge data from multiple sources into one comprehensive target, or separate databases based on their purpose. Replication also copies critical data to a secure location also serves frequently as the basis for disaster recovery or high availability solutions.

A chipset is a group of integrated circuits (microchips) that can be used together to serve a single function and are therefore manufactured and sold as a unit. For example, one chipset might combine all the microchips needed to serve as the communications controller between a processor and memory and other devices in a computer.

### BRIEF DESCRIPTION OF THE DRAWINGS

Fig.1 illustrates a traditional L3 VLAN configuration having different VIDs for each L3 VLAN;
Fig.2 illustrates a L3 VLAN configuration reusing VIDs for each ports according to the present invention; and
Fig.3 illustrates a table view of two stage replication according to the present invention.

### DETAILED DESCRIPTION OF THE PREFERED EMBODIMENTS

The present invention is directed to multi-casting in a metro-ethernet environment through replication. The solution to the foregoing problems is to realize that different ports are capable of having the same VLAN memberships, thereby not using up too many VIDs. In other words, the invention uses many VLANs functionally but retains the same numbers.

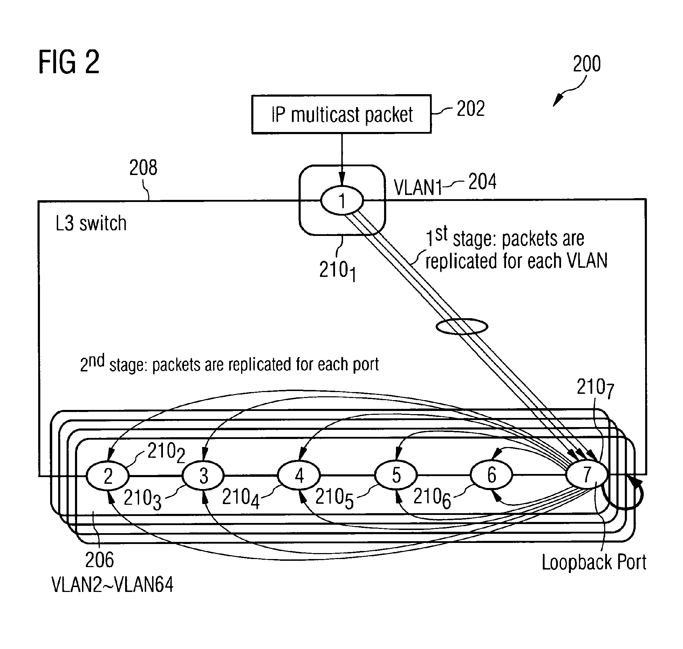

In a particular embodiment that will be described with reference to Figure 2, the invention provides a configuration 200 for replicating an IP multicast packet 202 using a two-stage arrangement in which a VLAN1 204 replicates packets in a first stage and another VLAN, here shown as VLAN7, replicates the packets for each port and loops the packets back to the other VLANs 2-n 206 in a second stage. Of course, a more generic replication unit may be employed instead of the VLANs.

Layer 3 switching is utilized in this example because it lends itself to reusing the same VIDs on the same ports. Layer 2 ports, for example, belonging to the same VID share the same domain and forward traffic among each other on layer 2, so called Bridged IP, or BRIP. Indeed, the invention, in one variant, disables the L2 switching by using ACLs, i.e., allowing only b/c traffic and u/c traffic, thereby discarding all other traffic. However, it shall be appreciated that any switching that allows multiple ports to share the same VID may be employed. L3 switching is simply one possibility described in this invention.

In the aspect shown in Figure 2, a layer 3 (L3) switch 208 is employed to route the packets to their respective ports according to the predetermined VLAN assignments. In this case, the L3 switch input port 210₁ is coupled to the VLAN1 204 and couples downlink output ports, e.g. output ports 210₂₋₆₄, to VLAN_{S2-64 206,} respectively. At least one output port, here shown 210₇ is configured to loop back to the other output ports 210_{2-6 and 8-63}. In terms of the 802.1Q standard, with this configuration the L3 VLAN configuration reuses the virtual IDs (VIDs) for each port.

The present invention performs multicast replication in stages. VLAN-wise replication occurs at the first stage and port-wise replication occurs at the second stage. In practice, the second stage replication is usually supported for all ports and the first stage is limited by internal replication limitations. If the switching chipset provides 24 downlink ports and maximum multicast replication is limited by 63, then, two stage replication yields 63*24 replicated IP packets. In the embodiment shown in Figure 2, at least one port is reserved for loopback operation, however, more than one port may be reserved for this purpose. The replicated packets from the first stage are then looped back to the other output ports where they undergo a second stage replication process.

It shall be appreciated that, by replicating the packet in two stages, the effective number of packets replicated is maximized to the square of the original number. In the case of 63 different replica of a m/c frame, 63 new frames are generated with identical L3 information but different VIDs. These are looped through a port that is not BRIP configured and the switch replicates the looped-back frames to each port that is a member of the VLAN. The effective number of replica is thereby kxm, where k is the number of native L3 replica and m the number of BRIP VLANs. For example, if the limit value of the number of output port VLANs is 63, then the number of replicated packets will be 63*63=3969.

In operation, IP data packets comprise a program or multicast to be communicated, or broadcast, between a single sender and multiple receivers on a network. Typical uses include the updating of mobile personnel from a home office and the periodic issuance of online newsletters. Various types of multicasting are known, such as multicast, anycast and unicast, provided by Internet Protocol Version 6 (IPv6).

The multicasts of interest here are typically broadcast by a metropolitan area network (MAN) that interconnects users with computer resources in a geographic area. Typically, MANs cover a region larger than that covered by even a large local area network (LAN) but smaller than the area covered by a wide area network (WAN). The term is commonly understood and applied to the interconnection of networks in a city into a single larger network. This may then also offer efficient connection to a wide area network. However, a MAN, also known as a campus network also covers the interconnection of several local area networks by bridging them with backbone lines. In any event, the invention may be practiced with other types of networks as well.

To continue, the IP packets are replicated and sent over an IP protocol network, such as the Ethernet. In the exemplary embodiment described, an Ethernet based MAN, generally termed a Metro Ethernet Network (MEN), is employed. A Metro Ethernet Network is generally defined as the network that bridges or connects geographically separated enterprise LANs while also connecting across the WAN or backbone networks that are generally owned by service providers. The Metro Ethernet Networks provide connectivity services across Metro geography utilizing Ethernet as the core protocol and enabling broadband applications.

The embodiment shown in Figure 2 employs a virtual (or logical) local area network (VLAN) to replicate the data packets. VLANs are local area networks (LAN) with a definition that maps workstations on some other basis than geographic location, e.g., by department, type of user, or primary application, etc. The virtual LAN controller can change or add workstations and manage load balancing and bandwidth allocation more easily than with a physical picture of the LAN. Network management software keeps track of relating the virtual picture of the local area networks with the actual physical picture.

The switch 208 may be a layer 3 (L3) switch, for example. The most common layering scheme, will be briefly described here. However, any layering scheme may be provided. In general, layering provides guidelines, rather than strict rules, for delegating networking functionality. In the most common scheme, Layer 1, known as the interface layer, is responsible for device connectivity. Layer 2, known as the switching layer, allows end station addressing and attachment. The Layer 3 Switch was introduced to reduce the number of devices to be managed, and to lower the cost of a combined Layer 2 and 3 solution.

A Layer 3 Switch, generally is a Router that does everything to a packet that a traditional router does. Namely, the layer 3 switch determines forwarding path based on Layer 3 information, validates the integrity of the Layer 3 header via checksum, verifies packet expiration and updates accordingly, processes and responds to any option information, updates forwarding statistics in the Management Information Base (MIB), and applies security controls if required.

In addition, the Layer 3 switch is designed to handle high-performance LAN traffic, and can be placed anywhere within a network core or backbone, easily and cost-effectively replacing the traditional collapsed backbone router. The Layer 3 switch communicates with the WAN router using industry-standard routing protocols like RIP and OSPF.

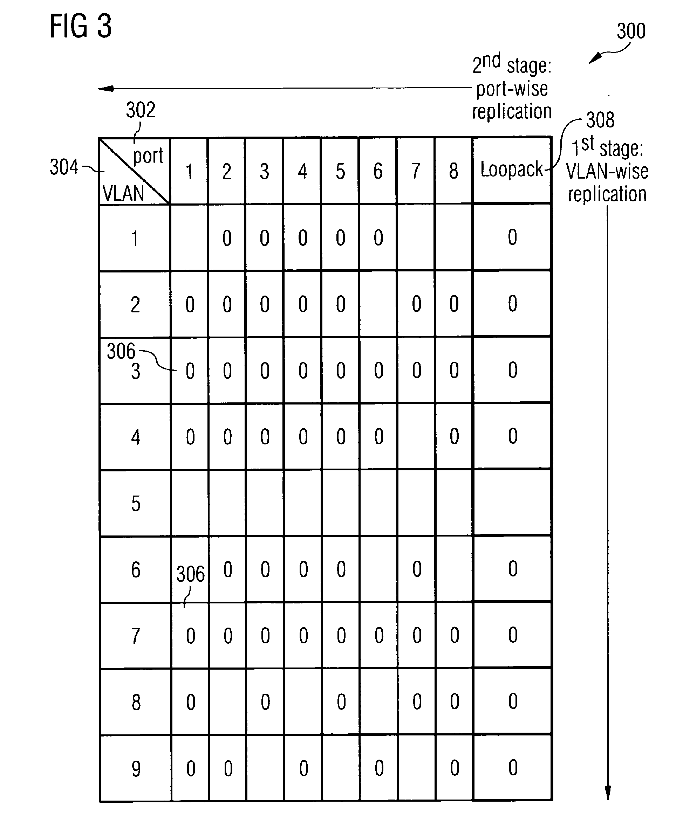

In practice, due to the architectural limitation in L3 multicast replication table, replication behavior at each stage will be different. Figure 3 illustrates a two stage replication table 300. The abscissa 302 indicates the port number, i.e., the VLAN IDs. Here, there are 8 ports shown, but the actual number of ports may be any number. The oordinate 304 indicates the VLAN number. The circles 306 show those ports and VLANs that are registered for multicast membership. Thus, the first stage of VLAN-wise replication is shown laterally along the VLAN entries and the second stage of port-wise replication is shown longitudinally along the Port entries.

In the figure, the membership of each VLAN in a loopback port is indicated by a circle in the loopback column 308. The loopback column is derived when any port for a particular VLAN is indicated as a member. In other words, a circle indicates a logical OR of any of the ports. For example, VLANs 1-4 and 6-8 indicate at least 1 port that is to replicate packets and, therefore, a circle appears in each of the corresponding entries in the loopback column 308. VLAN 5, however, does not replicate any packets for any of the ports and, therefore, the loopback column for VLAN 5 has no entry.

The present invention has been described in terms of a specific embodiment. However, it shall be appreciated that the invention may be modified or practiced in another manner than that described without deviating from the scope of the invention.

## Claims

1. An apparatus for replicating an IP data packet,
**characterized in that**:
a plurality of networks connecting local clients to a central hub, wherein the networks are logically configured;
a switch having at least one input port coupled to a network and a plurality of output ports coupled to other networks,
wherein the switch assigns at least one output port to more than one network,
wherein at least one of the output ports of the switch is configured to loop back the replicated data packets to the other remaining output ports.

2. The apparatus of claim 1, further **characterized in that** the switch receives the IP data packet at the input port and replicates the IP data packet a number of times corresponding to the number of networks coupled to the output ports,

3. The apparatus of claims 1-2, further **characterized in that** the switch replicates the IP data packets received at the output ports a number of times corresponding to the number of output ports.

4. The apparatus of claims 1-3, further **characterized in that** the networks are virtual local area networks VLANs.

5. The apparatus of claims 1-4, further **characterized in that** wherein the switch is a layer 3 L3 type switch.

6. The apparatus of claims 1-5, further **characterized in that** wherein the switch switches the IP data packets amongst the ouput ports according to Virtual IDs VIDs in accordance with the 802.1Q IEEE standard.

7. An apparatus for replicating an IP data packet comprising:
a plurality of networks connecting local clients to a central hub, wherein the networks are logically configured;
a switch having at least one input port coupled to a network and a plurality of output ports coupled to other networks,
wherein the switch assigns at least one output port to more than one network,
wherein the switch receives the IP data packet at the input port and replicates the IP data packet a number of times corresponding to the number of networks coupled to the output ports,
wherein the switch replicates the IP data packets received at the output ports a number of times corresponding to the number of output ports.

8. The apparatus of claim 7, further **characterized in that**
wherein the networks are virtual local area networks VLANs.

9. The apparatus of claims 7-8, further **characterized in that** the switch is a layer 3 L3 type switch.

10. The apparatus of claims 7-9, further **characterized in that** the switch switches the IP data packets amongst the output ports according to Virtual IDs VIDs in accordance with the 802.1Q IEEE standard.

11. A method for replicating an IP data packet for broadcasting by a switch having at least one input port coupled to a network and a plurality of output ports coupled to other networks, wherein the switch assigns at least one output port to more than one network, wherein the networks connect local clients to a central hub and are logically configured, **characterized in that**:
replicating the IP data packet received at the input port of the switch a number of times corresponding to the number of networks coupled each of to the output ports,
and replicating the IP data packets received at the output ports a number of times corresponding to the number of output ports.

12. The method of claim 11 further **characterized in that**, configuring at least one of the output ports of the switch to loop back the replicated data packets to the other remaining output ports.

13. The method of claim 11-12 further **characterized in that**,the networks are virtual local area networks VLANs.

14. The method of claim 11-13 further **characterized in that**,the switch is a layer 3 L3 type switch.

15. The method of claim 11-14 further **characterized in that**,the switch switches the IP data packets amongst the ouput ports according to Virtual IDs VIDs in accordance with the 802.1Q IEEE standard.
